# EUROPÄISCHE PATENTSCHRIFT

(11) **EP 2 250 407 B1**
(45) Veröffentlichungstag und Bekanntmachung des Hinweises auf die Patenterteilung: **29.07.2015**
(21) Anmeldenummer: 09719906.1
(22) Anmeldetag: 06.02.2009
(51) Int. Cl.: F16H 61/28

(54) **ANORDNUNG ZUM ÜBERTRAGEN VON DATEN UND/ODER SIGNALEN BEI EINEM GETRIEBE**
ARRANGEMENT FOR TRANSMITTING DATA AND/OR SIGNALS IN A TRANSMISSION
DISPOSITIF DE TRANSMISSION DE DONNÉES ET/OU DE SIGNAUX DANS UNE BOÎTE DE VITESSES

(30) Priorität: 13.03.2008 DE 102008000639
(43) Veröffentlichungstag der Anmeldung: 17.11.2010
(73) Patentinhaber: ZF Friedrichshafen AG, 88038 Friedrichshafen (DE)
(72) Erfinder: AMANN, Notker, 88045 Friedrichshafen (DE); KETTELER, Karl-Hermann, 88677 Markdorf (DE); KETT, Jürgen, 88045 Friedrichshafen (DE); FUESSL, Andreas, 88079 Kressbronn (DE)
(86) Internationale Anmeldenummer: PCT/EP2009/051390
(87) Internationale Veröffentlichungsnummer: WO 2009/112315

(56) Entgegenhaltungen:
- EP-A- 1 873 032
- WO-A-03/078216
- WO-A-2008/046737

## Beschreibung

Die vorliegende Erfindung betrifft eine Anordnung zum Übertragen von Daten und/oder Signalen zwischen einem Getriebesteuergerät und mehreren Aktuatorsteuergeräten. Das Dokument EP-A-1873032 wird als nächstliegender Stand der Technik angesehen. Es offenbart eine Anordnung zum Übertragen von Daten oder Signalen zwischen einem Getriebesteuergerät und mehreren Aktuatorsteuergeräten zum Betätigen von Schalteinrichtungen wobei zwischen dem Getriebesteuergerät und den Aktuatorsteuergeräten zumindest eine drahtlose Kommunikationsübertragungseinrichtung vorgesehen ist.

Bei bekannten automatisierten Schaltgetrieben und Automatgetrieben ist es erforderlich, dass Steuerungs- und Regelungssignale sowie Applikationsapplikationsdaten zwischen Getriebeaktuatoren, welche die Schalteinrichtungen des Getriebes betätigen, innerhalb des Getriebes mit einem Steuergerät üblicherweise an der Getriebeaußenseite ausgetauscht werden. Die Aktuatorik der automatisierten Schaltgetriebe und Automatikgetriebe sind so aufgebaut, dass die Betätigungseinrichtung für die Stellbewegungen Schalten, Wählen und Kuppeln an den Schalteinrichtungen meist am Getriebegehäuse fixiert sind und somit nicht an bewegbaren Teilen. Die eigentliche Stellbewegung, die meist rotierende Teile der Schalteinrichtung in ihrer Position verändert, wird unter Zuhilfenahme von mechanischen, hydraulischen oder pneumatischen Übertragungselementen ausgeführt. Die Steuerung und Regelung der einzelnen Aktuatoren beziehungsweise Betätigungseinrichtungen erfolgt zentral von einem Getriebesteuergerät, so dass ein konzentriertes Regelsystem vorliegt.

Wenn der Umfang der mechanischen, hydraulischen oder pneumatischen Übertragungsstrecke aufgrund von konstruktiven Freiheiten und den damit verbundenen Bauraumeinsparungen reduziert werden soll, müssen die Aktuatoren beziehungsweise die Betätigungseinrichtungen an den Ort der eigentlichen Stellbewegung der Schalteinrichtung verschoben werden. Dies bedeutet, dass die vormals stationären Aktuatoren an sich bewegenden Teilen platziert werden müssen. Es handelt sich dabei um Getriebeteile, die an der Momentübertragung des Getriebes beteiligt sind und somit auch beschleunigt oder abgebremst werden. Beispielsweise kann der Aktuator auch an einem innen liegenden Getriebebauteil, wie zum Beispiel einer Getriebewelle, vorgesehen werden, so dass das konzentrierte Regelsystem aufgelöst wird, da jeder Aktuator ein eigenes Steuergerät für seine Stellaufgaben benötigt. Somit ergibt sich ein verteiltes Regelsystem. Da die Steuer- und Regelsignale sowie die Applikationsdaten zwischen den Steuergeräten ausgetauscht werden müssen, werden auch mitrotierende Steuergeräte vorgesehen. Bei dieser Anordnungsmöglichkeit ist eine Kommunikation über drahtgebundene Kommunikationssysteme nicht möglich.

Demnach liegt der vorliegenden Erfindung die Aufgabe zu Grunde, eine Anordnung zum Übertragen von Daten und/oder Signalen der eingangs beschriebenen Gattung vorzuschlagen, welche eine Kommunikation zwischen den relativ zueinander bewegbaren Aktuatorsteuergeräten und dem Getriebesteuergerät auf einfachste Weise realisiert.

Die der Erfindung zu Grunde liegende Aufgabe wird durch die Merkmale des Patentanspruches 1 gelöst. Weitere vorteilhafte Ausgestaltungen ergeben sich aus den Unteransprüchen und den Zeichnungen.

Somit wird eine Anordnung zum Übertragen von Daten und/oder Signalen zwischen einem Getriebesteuergerät und mehreren Aktuatorsteuergeräten zur Vorortsteuerung von Stellbewegungen zum Betätigen von Schalteinrichtungen vorgeschlagen, wobei das Getriebesteuergerät und die Aktuatorsteuergeräte relativ zueinander bewegbar angeordnet sind. Erfindungsgemäß kann zwischen dem Getriebesteuergerät und den Aktuatorsteuergeräten zumindest eine vorzugsweise drahtlose oder dergleichen ausgeführte Kommunikationsübertragungseinrichtung vorgesehen sein.

Auf diese Weise kann das Problem hinsichtlich der Kommunikation zwischen sich bewegenden und feststehenden Steuergeräten oder dergleichen dadurch gelöst werden, dass die verschiedenen Steuergeräte teilweise bzw. abschnittsweise drahtgebunden und teilweise bzw. abschnittsweise drahtlos zur Daten und/oder Signalübertragung miteinander gekoppelt werden. Die vorgeschlagene Kommunikationsübertragungseinrichtung kann zum Ansteuern der Aktuatorsteuergeräte die erforderlichen Daten und Signale oder dergleichen auf beliebige Art und Weise übertragen. Dazu können kapazitive, induktive, optische und/oder funkbasierende Einrichtungen verwendet werden. Die Kommunikation sollte für sicherheitskritische Anwendungen ausgelegt sein und optional redundante Übertragungswege vorsehen.

Eine mögliche Ausführungsvariante der vorliegenden Erfindung kann vorsehen, dass die Kommunikationsübertragungseinrichtung zumindest ein getriebesteuergerätseitiges Kommunikationsinterface oder dergleichen und zumindest ein aktuatorsteuergerätseitiges Kommunikationsinterface umfasst, welche über eine kapazitive, induktive, optische oder dergleichen Übertragungsstrecke drahtlos miteinander kommunizieren. Als Gateway für die im System befindliche Übertragungsstrecke dienen somit vorzugsweise zumindest ein feststehendes, äußeres Kommunikationsinterface und ein im Inneren angeordnetes, bewegbares Kommunikationsinterface. Es sind auch andere Ausgestaltungen hinsichtlich der Kommunikationsübertragungseinrichtung möglich.

Wenn beispielsweise das Getriebesteuergerät an der Außenseite des Getriebes beispielsweise am Gehäuse befestigt ist, kann vorgesehen sein, dass das vorzugsweise auch mit dem Gehäuse befestigte Kommunikationsinterface über zumindest einen drahtgebundenen Datenbus oder dergleichen mit dem Getriebesteuergerät verbunden ist. Als Datenbus ist jede mögliche Verbindungsart verwendbar.

Um die z.B. bei dem Getriebe in oder an einer Welle angeordneten Aktuatorsteuergeräte mit der Kommunikationsübertragungseinrichtung zu verbinden, kann gemäß einer nächsten Ausgestaltung vorgesehen sein, dass das aktuatorsteuergerätseitige Kommunikationsinterface über einen z. B. drahtgebundenen Datenbus mit den Aktuatorsteuergeräten verbunden ist. Auch hier kann als Datenbus jede mögliche Verbindungsart verwendet werden.

Eine alternative Ausführung der Erfindung kann vorsehen, dass zum Beispiel mehrere Kommunikationsinterface von der Kommunikationsübertragungseinrichtung umfasst werden. Jedes Kommunikationsinterface kann zum Beispiel einem Aktuatorsteuergerät zugeordnet werden. Bei dieser Ausführung kann jedes Kommunikationsinterface über einen separaten drahtgebundenen Datenbus oder dergleichen mit dem zugeordneten Aktuatorsteuergerät verbunden werden. Auch hier sind andere beliebige Verbindungsarten einsetzbar.

Die vorgeschlagene Anordnung kann bei jedem beliebigen Getriebe eingesetzt werden, um das Problem bezüglich der Kommunikation zwischen sich bewegenden Bauteilen und feststehenden Bauteilen hinsichtlich der Daten und Signalübertragung zwischen den verschiedenen Steuergeräten zu lösen.

Nachfolgend wird die vorliegende Erfindung anhand der Zeichnungen näher erläutert. Es zeigen:
Fig. 1 eine schematische Ansicht einer ersten möglichen Ausführungsvariante einer erfindungsgemäßen Anordnung; und
Fig. 2 eine schematische Ansicht einer zweiten möglichen Ausführungsvariante der Anordnung.

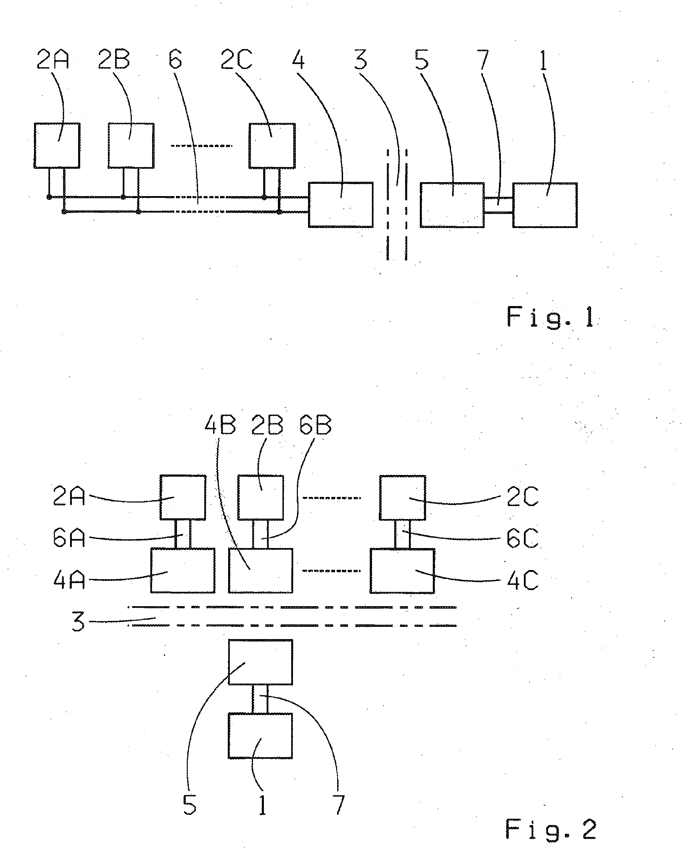

In den Figuren 1 und 2 ist jeweils eine mögliche Ausführungsvariante einer erfindungsgemäßen Anordnung zum Übertragen von Daten und/oder Signalen zwischen einem Getriebesteuergerät 1 und mehreren Aktuatorsteuergeräten 2A, 2B, 2C bei einem Fahrzeuggetriebe dargestellt.

Das verteilte Getrieberegelsystem besteht aus einer Anzahl n von Aktuatorsteuergeräten 2A, 2B, 2C. Diese Aktuatorsteuergeräte 2A, 2B, 2C dienen als Vorortsteuerung der Betätigungseinrichtungen, welche die jeweils zugeordneten Schalteinrichtungen zwischen den Schaltpositionen bewegen. Das Getriebesteuergerät 1 erzeugt für die Aktuatorsteuergeräte 2A, 2B, 2C die notwendigen Steuersignale und erhält von diesen eine Rückmeldung über den Aktuatorzustand. Als Gateway für die im System befindliche Übertragungsstrecke 3 einer Kommunikationübertragungseinrichtung sind je nach Ausführungsvariante ein oder mehrere im Getriebeinneren möglicherweise bewegte Kommunikationsinterface 4, 4A, 4B, 4C und ein äußeres möglicherweise gehäusefestes Kommunikationsinterface 5 vorgesehen. Erfindungsgemäß ist als Übertragungsstrecke 3 zwischen dem bewegten Kommunikationsinterface 4, 4A, 4B, 4C und dem gehäusefesten Kommunikationsinterface 5 eine kapazitive, induktive, optischer oder dergleichen Übertragungsart als Übertragungsstrecke 3 vorgesehen.

In Figur 1 ist eine erste Ausführungsvariante der Anordnung gezeigt. Bei diesem Lösungsansatz ist nur ein bewegbares, z.B. an oder in einer Getriebewelle angeordnetes Kommunikationsinterface 4 vorgesehen. Somit sind die verschiedenen Aktuatorsteuergeräte 2A, 2B, 2C, welche ebenfalls zum Beispiel an oder in einer Getriebewelle angeordnet sind, über einen gemeinsamen Datenbus 6 mit dem Kommunikationsinterface 4 zum Austausch von Daten und/oder Signalen verbunden. Die Steuer- und Regelsignale für alle Aktuatorsteuergeräte 2A, 2B, 2C werden auf diesen geschrieben und von diesem gelesen. Diese Gesamtheit der Signale wird über das globale Kommunikationsinterface 4 vom Getriebeinneren über die Übertragungsstrecke 3 an das äußere Kommunikationsinterface 5 übermittelt. Somit kommt eine Kommunikation zwischen dem Getriebesteuergerät 1 und den Aktuatorsteuergeräten 2A, 2B, 2C zustande. Zwischen dem Kommunikationsinterface 5 und dem Steuergerät 1 ist ein drahtgebundener Datenbus 7 zur Daten- und/oder Signalübertragung vorgesehen. Für die Übertragung der Signale ist zum einen ein Übertragungsprotokoll für den Abschnitt der drahtgebundenen Kommunikation notwendig und zum anderen ein weiteres für die drahtlose Übertragungsstrecke 3 zwischen den beiden Kommunikationsinterface 4 und 5 erforderlich.

Figur 2 zeigt eine zweite mögliche Ausführungsvariante der erfindungsgemäßen Anordnung. Bei der zweiten Ausführungsvariante besitzt jedes Aktuatorsteuergerät 2A, 2B, 2C ein eigenes inneres Kommunikationsinterface 4A, 4B, 4C. Somit entfällt der drahtgebundene Datenbus 6 zwischen den Aktuatorsteuergeräten 2A, 2B, 2C. Die Informationen der einzelnen Aktuatorsteuergeräte 2A, 2B, 2C wird direkt über das jeweils zugeordnete Kommunikationsinterface 4A, 4B, 4C und der drahtlosen Übertragungsstrecke 3 übertragen. Dazu ist jeweils ein drahtgebundener Datenbus 6A, 6B, 6C zwischen jedem Aktuatorsteuergerät 2A, 2B, 2C und jedem Kommunikationsinterface 4A, 4B, 4C vorgesehen. Dabei ist ein Datenaustausch zwischen den Aktuatorsteuergeräten 2A, 2B, 2C genauso möglich, wie zwischen den Aktuatorsteuergeräten 2A, 2B, 2C und dem äußeren Kommunikationsinterface 5 und somit mit dem Getriebesteuergerät 1, wobei ein geeignetes Übertragungsprotokoll für die Übertragung zwischen den inneren, bewegbar in dem Getriebe angeordneten Kommunikationsinterface 4A, 4B, 4C und dem feststehenden, zum Beispiel an dem Getriebegehäuse angeordneten Kommunikationsinterface 5 über die drahtlose Übertragungsstrecke 3 verwendet wird. Zwischen dem Kommunikationsinterface 5 und dem Steuergerät 1 ist wieder der drahtgebundene Datenbus 7 zur Daten- und/oder Signalübertragung vorgesehen.

Unabhängig von der jeweiligen Ausführungsvariante wird bei der erfindungsgemäßen Anordnung das Kommunikationsproblem der bekannten Anordnung im wesentlichen dadurch gelöst, dass die verschiedenen Steuergeräte teilweise drahtgebunden und teilweise drahtlos zur Daten und/oder Signalübertragung miteinander gekoppelt werden.

### Bezugszeichen

- 1: Getriebesteuergerät
- 2A, 2B, 2C: Aktuatorsteuergerät
- 3: Übertragungsstrecke
- 4, 4A, 4B, 4C: Kommunikationsinterface
- 5: Kommunikationsinterface
- 6, 6A, 6B, 6C: Datenbus
- 7: Datenbus

## Patentansprüche

1. Anordnung zum Übertragen von Daten und/oder Signalen zwischen einem Getriebesteuergerät (1) und mehreren Aktuatorsteuergeräten (2A, 2B, 2C) zur Vorortsteuerung von Stellbewegungen zum Betätigen von Schalteinrichtungen, wobei
- zwischen dem Getriebesteuergerät (1) und den Aktuatorsteuergeräten (2A, 2B, 2C) zumindest eine drahtlose Kommunikationsübertragungseinrichtung (4, 5) vorgesehen ist, umfassend zumindest ein getriebesteuergerätseitiges Kommunikationsinterface (5) und zumindest ein aktuatorsteuergerätseitiges Kommunikationsinterface (4), welche über eine kapazitive, induktive und/oder optische Übertragungsstrecke (3) drahtlos miteinander kommunizieren,
- das aktuatorsteuergerätseitige Kommunikationsinterface (4) über einen drahtgebundenen Datenbus (6) mit den Aktuatorsteuergeräten (2A, 2B, 2C) verbunden ist,
- die Aktuatorsteuergeräte (2A, 2B, 2C) und das aktüatorsteuergerätseitige Kommunikationsinterface (4) relativ zu dem Getriebesteuergerät (1) bewegbar angeordnet sind.

2. Anordnung nach Anspruch 1, **dadurch gekennzeichnet, dass** das gehäusefest angeordnete Getriebesteuergerät (1) über zumindest einen drahtgebundenen Datenbus (7) mit dem gehäusefest angeordneten Kommunikationsinterface (5) verbunden ist.

3. Anordnung nach einem der vorangehenden Ansprüche, **dadurch gekennzeichnet, dass** die Aktuatorsteuergeräte (2A, 2B, 2C) und das aktuatorsteuergerätseitige Kommunikationsinterface (4) In einer Getriebewelle angeordnet sind.

## Claims

1. Arrangement for transmitting data and/or signals between a transmission control unit (1) and a plurality of actuator control units (2A, 2B, 2C) for locally controlling adjusting movements for actuating switching devices,
- at least one wireless communication transmission device (4, 5) being provided between the transmission control unit (1) and the actuator control units (2A, 2B, 2C), said communication transmission device comprising at least one communication interface (5) on the side of the transmission control unit and at least one communication interface (4) on the side of the actuator control units, which interfaces wirelessly communicate with one another via a capacitive, inductive and/or optical transmission path (3),
- the communication interface (4) on the side of the actuator control units being connected to the actuator control units (2A, 2B, 2C) via a wired data bus (6),
- the actuator control units (2A, 2B, 2C) and the communication interface (4) on the side of the actuator control units being arranged in a movable manner relative to the transmission control unit (1).

2. Arrangement according to Claim 1, **characterized in that** the transmission control unit (1) arranged in a fixed manner relative to the housing is connected to the communication interface (5) arranged in a fixed manner relative to the housing via at least one wired data bus (7).

3. Arrangement according to one of the preceding claims, **characterized in that** the actuator control units (2A, 2B, 2C) and the communication interface (4) on the side of the actuator control units are arranged in a transmission shaft.

## Revendications

1. Ensemble de transmission de données et/ou de signaux entre un appareil (1) de commande de transmission et plusieurs appareils (2A, 2B, 2C) de commande d'actionneur, pour la commande sur site de déplacements de réglage destinés à actionner des dispositifs de changement de rapport de transmission,
au moins un dispositif (4, 5) de transmission et de communication sans fil étant prévu entre l'appareil (1) de commande de transmission et les appareils (2A, 2B, 2C) de commande d'actionneur et comprenant au moins une interface (5) de communication située du côté de l'appareil de commande de transmission et au moins une interface (4) de communication située du côté des appareils de commande d'actionneur, ces interfaces communiquant sans fil les unes avec les autres suivant un parcours de transmission capacitif, inductif et/ou optique (3),
l'interface (4) de communication située du côté de l'appareil de commande de transmission étant raccordée aux appareils (2A, 2B, 2C) de commande d'actionneur par l'intermédiaire d'un bus de données (6) filaire et
les appareils (2A, 2B, 2c) de commande d'actionneur et l'interface (4) de communication située du côté des appareils de commande d'actionneur étant disposés de manière à pouvoir se déplacer par rapport à l'appareil (1) de commande de transmission.

2. Ensemble selon la revendication 1, **caractérisé en ce que** l'appareil (1) de commande de transmission disposé fixement dans un boîtier est raccordé par l'intermédiaire d'au moins un bus de données (7) filaire à l'interface (5) de communication disposée fixement sur le boîtier.

3. Ensemble selon l'une des revendications précédentes, **caractérisé en ce que** les appareils (2A, 2B, 2C) de commande d'actionneur et l'interface (4) de communication située du côté des appareils de commande d'actionneur sont disposés dans un arbre de la transmission.
